# EUROPÄISCHE PATENTANMELDUNG

(11) **EP 0 984 242 A2**
(43) Veröffentlichungstag der Anmeldung: **08.03.2000**
(21) Anmeldenummer: 99890228.2
(22) Anmeldetag: 06.07.1999
(51) Int. Cl.: F41A 23/18, B60R 7/14, A47B 81/00

(54) **Versperrbare Halterung für Schusswaffen**

(30) Priorität: 02.09.1998 AT 57698 U
(71) Anmelder: Kaba Gege, 3130 Herzogenburg (AT)
(72) Erfinder: Rogler, Karl Ing., 3130 Herzogenburg (AT)
(74) Vertreter: Müllner, Erwin, Dr.

(57) **Zusammenfassung**

Eine versperrbare Halterung für Schusswaffen umfasst ein Verbindungsstück an der Waffe und ein ortsfest z.B. an einem Massivteil eines Fahrzeuges angebrachtes Kupplungsstück (5). Das Verbindungsstück ist als vorzugsweise in den Kolben (2) eines Gewehres einschraubbare Hülse (1) ausgebildet. Die Bohrung der Hülse (1) kann einen Ansatz (6) des Kupplungsstückes (5) aufnehmen, der eine Verriegelung trägt, welche an der Hülse (1) formschlüssig angreift. Die Verriegelung, vorzugsweise über den Ansatz (6) in eine Ringnut (4) der Hülse (1) durch einen Sperrschieber (10) radial ausschiebbare Kugeln (9), wird durch einen Schließzylinder (12) betätigt. Statt der Kugeln (9) können auch Sperrkörper in Form von radial gefederten Keilstücken bzw. Fallen, die über den Ansatz (6) in radialer Richtung vortreten, vorgesehen sein.

## Beschreibung

Die Erfindung betrifft eine versperrbare Halterung für Schusswaffen mit einem Verbindungsstück an der Waffe und einem Kupplungsstück, welches ortsfest angeordnet ist. Um den Zugriff auf Schusswaffen vor Unbefugten zu sichern, ist es zweckmäßig die Schusswaffen versperrt aufzubewahren. Abgesehen von Stahlschränken für Jagdwaffen sind auch versperrbare Halterungen bekannt, die mit Hilfe von Bügeln oder Stangen eine Entnahme verhindern. In Einsatzfahrzeugen beispielsweise der Polizei sollten Schusswaffen rasch zur Verfügung stehen. Anderseits müssen gerade diese Schusswaffen gegen eine unbefugte Entnahme gesichert sein, wenn man bedenkt, dass die Beamten einer Funkstreife im Einsatzfall vorerst zur Erkundung das Fahrzeug verlassen, ohne etwa das Sturmgewehr mitzunehmen. Es muss vermieden werden, dass sich Dritte inzwischen dieser Waffen im abgestellten Fahrzeug bemächtigen.

Es ist daher Aufgabe der Erfindung, eine einfache versperrbare Halterung für Schusswaffen anzugeben, die keine Bügel oder derartige verlierbare Bauteile aufweist und die nur über ortsfeste Verbindungsstücke bzw. Kupplungsstücke verfügt. Dies wird dadurch erreicht, dass das Verbindungsstück als Hülse ausgebildet und an der Waffe, insbesondere am bzw. im Kolben oder Schaft eines Gewehres im Wesentlichen unlösbar befestigt ist, dass das Kupplungsstück einen Ansatz trägt, auf den die Hülse einschließlich der Waffe aufsteckbar ist und dass an dem in die Hülse hineinragenden Teil des Ansatzes eine Verriegelung vorgesehen ist, die an der Hülse formschlüssig angreift, wobei die Verriegelung durch einen Schließzylinder im Kupplungsstück, betätigbar ist. Die Hülse kann in eine Bohrung des Kolbens eingeschraubt sein. Die Bohrung der Hülse selbst kann zylindrisch sein. Es hat dann der Ansatz des z.B. am Kardantunnel des Fahrzeuges befestigten Kupplungsstückes ebenfalls Zylinderform. Die Hülse kann auch als Pfropfen ausgeführt sein, der einen Schlitz aufweist, der dann auf den im Querschnitt rechteckigen Ansatz des Kupplungsstückes aufgeschoben wird. Wie bekannt, wird der Lauf der Waffe durch einen Ring oder in eine zylindrische Kappe geschoben und erst dann der Kolben auf den Ansatz aufgerastet. Die Verriegelung kann sperrend einrasten und erst mittels eines Schlüssels zu öffnen sein oder es kann die Waffe eingesetzt und dann mittels des Schlüssels versperrt werden, wobei bei der Entnahme wieder der Schlüssel zum Aufsperren notwendig ist. Eine besondere Ausführungsform der Erfindung ist dadurch gekennzeichnet, dass als Verrieglung Sperrkörper, insbesondere Kugeln, vorzugsweise diametral im Ansatz vorgesehen sind, die über den Umfang des Ansatzes hinaus in radialer Richtung in eine Ausnehmung der Hülsenbohrung eingreifend oder eine Kante der Hülse hintergreifend ausschiebbar sind, dass den Sperrkörpern, insbesondere Kugeln, im Inneren des Ansatzes eine Bohrung gegenüberliegt, in die die Sperrkörper bzw. Kugeln zurückweichend eintauchen, dass in der Bohrung ein Sperrschieber vorgesehen ist, dessen vorzugsweise kegelförmig ausgebildete Stirnflächen an den Sperrkörpern, insbesondere Kugeln, zu deren radialen Positionierung anliegt und dass der Sperrschieber mit seinem fußseitigen Ende an einer Schulter des Schließzylindergehäuses in der Sperrstellung anliegt und eine Ausnehmung zum Eintauchen und Zurückweichen des Sperrschiebers und damit der Sperrkörper, insbesondere Kugeln, in der Offenstellung in dem Schließzylindergehäuse vorgesehen ist. Die insbesondere als Kugeln ausgebildeten Sperrkörper sind in Querbohrungen des Ansatzes radial verschiebbar, wobei jedoch sichergestellt ist, dass sie aus ihren Bohrungen nicht herausfallen können. Dazu kann entweder ein Federring mit koaxialen Bohrungen zu den Bohrungen für die Kugeln z.B. in einer Nut außen am Ansatz vorgesehen sein, wobei die koaxialen Bohrungen etwas geringeren Durchmesser aufweisen, als der Bohrungsdurchmesser im Ansatz. Die Kugeln werden durch den Sperrschieber radial nach außen gedrückt und greifen in eine Ringnut der Hülse ein oder sie hintergreifen einfach die Hülse an ihrem innen liegenden Ende. Wenn der Sperrschieber, dessen Verschieberichtung im hohlen Ansatz senkrecht zur Verschieberichtung der Kugeln steht, zurückweicht oder unter dem Druck der Kugeln infolge seiner kegelförmigen Spitze zurückgeschoben wird, dann können die Kugeln zur Gänze in den Ansatz eintauchen und kommen dadurch mit der Hülse in der Waffe außer Eingriff. Der Sperrschieber stützt sich fußseitig an einer Schulter des Schließzylindergehäuses oder einer Verlängerung desselben ab, sofern sich der Schließzylinder in der Sperrstellung befindet. Wird der Schließzylinder aufgesperrt, dann verdreht er sich und die Ausnehmung liegt fluchtend mit dem Sperrschieber und ermöglicht dessen Zurückweichen.

Beim Zusperren sorgt eine Schrägfläche am Ende der Ausnehmung dafür, dass der Sperrschieber vorgeschoben wird. Dieser Vorschub bewirkt über die Keilspitze des Sperrschiebers ein Verdrängen der Kugeln radial nach außen in die Sperrstellung.

An Stelle der Kugeln können als Sperrkörper auch radial verschiebbare Fallen mit Einlaufschrägen vorgesehen sein. Beim Aufstecken der Waffe läuft die Hülse auf die Einlaufschrägen auf, drückt diese hinunter, bis die Fallen hinter einer Sperrfläche in der Hülse einrasten. Der Sperrschieber verhindert das Zurückdrücken der als Fallen keilförmig ausgebildeten Sperrkörper. Wird der Sperrschieber mittels des Schließzylinders zurückgezogen, dann nimmt er einen Ring mit, der auf die Einlaufschrägen der Fallen aufläuft und diese in den Ansatz hineindrückt. Es können zwei oder drei Fallen in 180° bzw. 120°-Anordnung am Ansatz vorgesehen sein. Diese Ausführung hat den Vorteil, dass die Waffe in die Sperrstellung einrastet und der Schlüssel nur bei der Entnahme der Waffe notwendig ist.

Ferner ist es für ein lösbares, jedoch verriegelbares Einschnappen zweckmäßig, wenn die Sperrkörper, vorzugsweise die Kugeln, in radialer Richtung federnd gelagert sind und in der Sperrstellung der Sperrschieber den Federweg gegen das Innere der Bohrung blockiert. Die federnde Lagerung kann durch einen im Inneren der Bohrung vorgesehenen offenen Federring erreicht werden, der z.B. in einer ringnut der Bohrung des Ansatzes liegt und der die Kugeln radial federnd nach außen drückt. Im Federring können Öffnungen mit etwas kleinerem Durchmesser als der Kugeldurchmesser zur Lagerung der Kugeln vorgesehen sein. Eine einfache Ausführungsform ist dadurch gekennzeichnet, dass der Ansatz selbst als Rohrstück in axialer Richtung mehrfach geschlitzt ausgeführt ist und die durch die Schlitze gebildeten federnden Finger stirnseitig mit Einlaufschrägen versehene Nocken tragen, die am Ende der Finger radial nach außen gerichtet sind und dass ein durch einen Schließzylinder gesteuerter Sperrschieber die Finger in der Sperrstellung untergreift und ein Zurückweichen aus einer Verbindung, insbesondere Formschlussverbindung, mit der Hülse unterbindet bzw. in der Freigabestellung den Raum zum Zurückfedern der Finger freigibt.

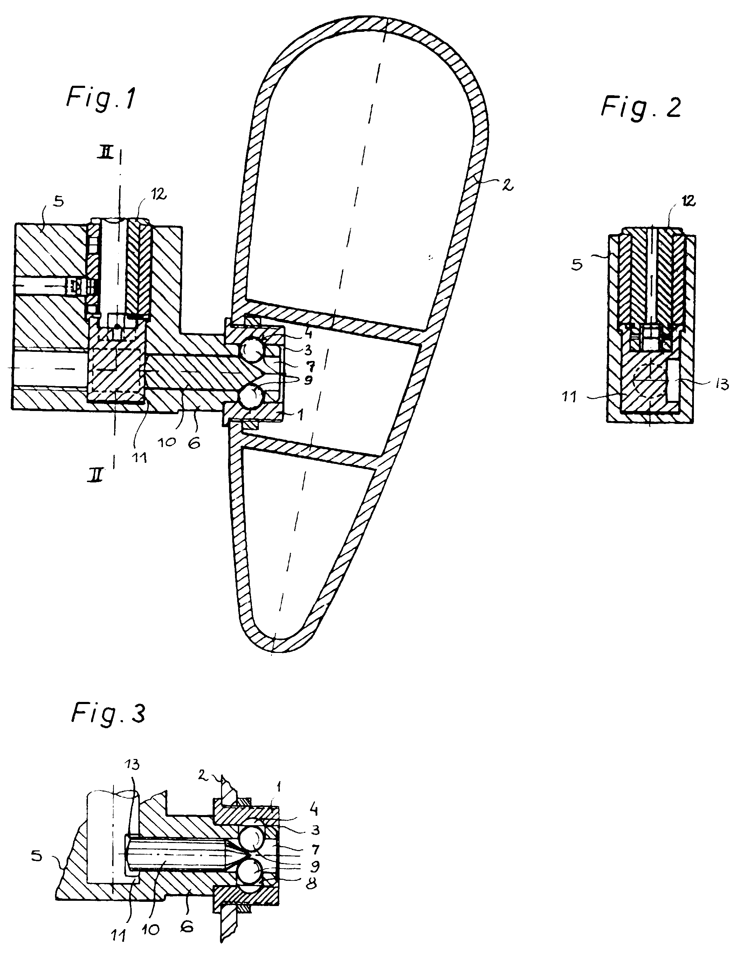

Ein Ausführungsbeispiel der erfindungsgemäßen versperrbaren Halterung ist in den Zeichnungen dargestellt. Fig. 1 zeigt einen Schnitt durch eine versperrte Halterung mit einem Kupplungsstück sowie einem Verbindungsstück im Schaft eines Gewehres, Fig. 2 einen Schnitt nach der Linie II-II in Fig. 1 und Fig. 3 ein Detail aus Fig. 1, jedoch im entriegelten zustand, sodass die Waffe entnommen werden kann.

Gemäß Fig. 1 ist ein als Hülse 1 ausgebildetes Verbindungsstück im Schaft 2 eines Gewehres fest eingeschraubt. Die Hülse 1 weist eine Ausnehmung, hier eine Bohrung 3 auf, die im Inneren eine Ringnut 4 trägt.

Ein Kupplungsstück 5 ist mit einem Massivteil beispielsweise eines Einsatzfahrzeuges fest verbunden. Das Kupplungsstück 5 umfasst einen Ansatz 6, dessen Querschnittsform mit der Ausnehmung (Bohrung 3) in der Hülse 1 übereinstimmt - dessen Außendurchmesser hier also dem Innendurchmesser der Hülse 1 entspricht. Der Gewehrkolben 2 bzw. das Gewehr kann daher auf das Kupplungsstück aufgesetzt bzw. aufgesteckt werden. Zur sicheren Befestigung wird der Lauf vorerst durch einen am Fahrzeug im Abstand vom Kupplungsstück 5 starr montierten Ring bzw. eine Manschette oder in eine Kappe (nicht dargestellt) gesteckt und sodann die oben genannte Verbindung mit dem Ansatz 6 des Kupplungsstückes 5 hergestellt.

Im Ansatz 6 ist sowohl eine axiale Bohrung 7 als auch eine radiale Bohrung 8 vorgesehen. Letztere ist in Fig. 3 deutlich sichtbar. Kugeln 9 bilden Sperrkörper und befinden sich in der Bohrung 8, die im aufgesteckten Zustand des Gewehres mit der Nut 4 in der Hülse 1 fluchtet. Ein Sperrschieber 10 kann in der Bohrung 7 axial verschoben werden. Seine Stirnfläche ist kegelförmig zugespitzt; mit seinem fußseitigen Ende stützt sich der Sperrschieber 10 im gesperrten Zustand an einer Schulter eines Schließzylindergehäuses 11 ab. Wie Fig. 1 zeigt, ist die Länge des Sperrschiebers 10 so bemessen, dass seine Spitze die Kugeln 9 radial nach außen über die Oberfläche des Ansatzes 6 hinaus in die Nut 4 hinein drückt. Damit stellen die Kugeln 9 eine formschlüssige Verbindung zwischen dem Kupplungsstück 5 und der Hülse 1 her. Die beiden Bauteile sind gegeneinander verriegelt.

Wenn der Schließzylinder 12 mittels eines Flachschlüssels gedreht wird - z.B. um 90° - dann dreht sich die Schulter als Auflage für den Sperrschieber 10 weg und eine Ausnehmung 13 liegt dem Fußende des Sperrschiebers 10 gegenüber. Der Sperrschieber 10 kann in diese Ausnehmung 13 eintauchen, wenn er durch die Kugeln 9 über die Kugelspitze zurückgeschoben wird. Diese Situation ist in Fig. 3 dargestellt. Die Kugeln 9 selbst können um in das Innere des Ansatzes 6 zurückweichen, wodurch die Verrieglung gelöst ist. Die Ausnehmung 13 ist als tangentiale Nut im zylindrischen Gehäuse 11 des Schließzylinders 12 oder in dessen zylindrischer Verlängerung ausgebildet; die Ausnehmung 13 geht schleifend in dem vollen Querschnitt des Schließzylindergehäuses 11 über. Wird also der Schlüssel in den Schließzylinder 12 eingesteckt und von Fig. 3 ausgehend eine 90° Drehung ausgeführt, dann schiebt die gegebenenfalls auch gekrümmte Führungsfläche am Nutengrund den Sperrschieber 10 gegen die Kugeln 9, die dann radial in die Position nach Fig. 1 geschoben werden.

Nicht dargestellt sind Maßnahmen, die verhindern, dass die Kugeln 9 bei entnommener Waffe aus den Bohrungen 8 herausfallen. Dazu kann über den Ansatz 6 zumindest um Bereich der Bohrungen 8 ein Ring, z.B. aus Federstahl, formschlüssig und drehfest überschoben sein, der Bohrungen aufweist, die mit den Bohrungen 8 fluchten, jedoch etwas kleiner sind. Ein ähnlicher, offener Ring aus Federstahl kann in einer Ringnut auch an der Innenwand der Bohrung 7 vorgesehen sein und die Kugeln 9 in Öffnungen von entsprechend verkleinertem Durchmesser aufnehmen. Letztere Maßnahme bewirkt bei geöffnetem Verschluss, gemäß Fig. 3, ein spürbares federndes Aufrasten der Waffe auf dem Ansatz 6. Eine Blockierung wird wieder durch Unterschieben des Sperrschiebers 10 unter die Kugeln 9 erreicht. Damit wird der Federweg ins Innere der Bohrung 7 unterbunden. Wenn an Stelle der Kugeln Sperrkörper in Form von radial nach außen gefederten Keilstücken als Fallen verwendet werden, dann ergibt sich eine Fixierung, ähnlich wie sie bei Regenschirmen zur Rastfixierung der abgespannten Lage bekannt ist. Wird eine Waffe aufgesteckt, dann schnappt die Fallenverbindung ein, wobei die Fallenstirn eine Entnahme verhindert, da sie eine Anlagenfläche an der Hülse 1 hintergreift. Erst durch ein Verschieben des Sperrschiebers 10 werden die um 180° oder 120° zueinander versetzten schmalen Fallen eingezogen. Dazu kann eine Kulissensteuerung zwischen Sperrschieber 10 und den Fallen vorgesehen sein.

Zwischen dem Schließzylinder und dem Sperrschieber kann auch eine Nockensteuerung bzw. Exzentersteuerung, auch in Form einer Zwangssteuerung durch den Schließzylinder vorgesehen sein.

## Patentansprüche

1. Versperrbare Halterung für Schusswaffen mit einem Verbindungsstück an der Waffe und einem Kupplungsstück, welches ortsfest angeordnet ist, **dadurch gekennzeichnet**, dass das Verbindungsstück als Hülse (1) ausgebildet und an der Waffe, insbesondere am bzw. im Kolben (2) oder Schaft eines Gewehres im Wesentlichen unlösbar befestigt ist, dass das Kupplungsstück (5) einen Ansatz (6) trägt, auf den die Hülse (1) einschließlich der Waffe aufsteckbar ist und dass an dem in die Hülse (1) hineinragenden Teil des Ansatzes (6) eine Verriegelung vorgesehen ist, die an der Hülse (1) formschlüssig angreift, wobei die Verriegelung durch einen Schließzylinder (12) im Kupplungsstück (5), betätigbar ist.

2. Versperrbare Halterung nach Anspruch 1, **dadurch gekennzeichnet**, dass als Verrieglung Sperrkörper, insbesondere Kugeln (9), vorzugsweise diametral im Ansatz (6) vorgesehen sind, die über den Umfang des Ansatzes (6) hinaus in radialer Richtung in eine Ausnehmung (4) der Hülsenbohrung (3) eingreifend oder eine Kante der Hülse (1) hintergreifend ausschiebbar sind, dass den Sperrkörpern, insbesondere Kugeln (9), im Inneren des Ansatzes (6) eine Bohrung (7) gegenüberliegt, in die die Sperrkörper bzw. Kugeln (9) zurückweichend eintauchen, dass in der Bohrung (7) ein Sperrschieber (10) vorgesehen ist, dessen vorzugsweise kegelförmig ausgebildete Stirnflächen an den Sperrkörpern, insbesondere Kugeln (9), zu deren radialen Positionierung anliegt und dass der Sperrschieber (10) mit seinem fußseitigen Ende an einer Schulter des Schließzylindergehäuses (11) in der Sperrstellung anliegt und eine Ausnehmung (13) zum Eintauchen und Zurückweichen des Sperrschiebers (10) und damit der Sperrkörper, insbesondere Kugeln (9), in der Offenstellung in dem Schließzylindergehäuse (11) vorgesehen ist.

3. Versperrbare Halterung nach Anspruch 2, **dadurch gekennzeichnet**, dass die Sperrkörper, vorzugsweise die Kugeln (9), in radialer Richtung federnd gelagert sind und in der Sperrstellung der Sperrschieber (10) den Federweg gegen das Innere der Bohrung (7) blockiert.

4. Versperrbare Halterung nach einen der Ansprüche 1 bis 3, **dadurch gekennzeichnet**, dass als Sperrkörper fallenartige Keilstücke in radialer Richtung zum Ansatz (6) in diesem federend vorgesehen sind, die in Schlitze des Ansatzes (6) gegen Federkraft eintauchen und durch den Sperrschieber (10) einziehbar sind.

5. Versperrbare Halterung nach Anspruch 4, **dadurch gekennzeichnet**, dass die fallenartigen Keilstücke eine Einlaufschräge und eine daran anschließende Stirnfläche aufweisen und beim Aufsetzen der Waffe die Einlaufschrägen auf die Hülse (1) auflaufen und die Stirnflächen hinter einer Anlagefläche der Hülse (1) einrasten.

6. Versperrbare Halterung nach Anspruch 1, **dadurch gekennzeichnet**, dass der Ansatz selbst als Rohrstück in axialer Richtung mehrfach geschlitzt ausgeführt ist und die durch die Schlitze gebildeten federnden Finger stirnseitig mit Einlaufschrägen versehene Nocken tragen, die am Ende der Finger radial nach außen gerichtet sind und dass ein durch einen Schließzylinder (12) gesteuerter Sperrschieber (10) die Finger in der Sperrstellung untergreift und ein Zurückweichen aus einer Verbindung, insbesondere Formschlussverbindung, mit der Hülse (1) unterbindet bzw. in der Freigabestellung den Raum zum Zurückfedern der Finger freigibt.
